# EUROPEAN PATENT APPLICATION

(11) **EP 3 145 159 A1**
(43) Date of publication of application: **22.03.2017**
(21) Application number: 16189320.1
(22) Date of filing: 16.09.2016
(51) Int. Cl.: H04L 29/08, H04W 4/02, G06Q 30/02, G06Q 30/06

(54) **CONSUMER COMPANION APPLICATION FRAMEWORK SYSTEM**

(30) Priority: 16.09.2015 NO 20151207
(71) Applicant: Evry AS, 1330 Fornebu (NO)
(72) Inventor: ENGAN, Jan Erik, 7540 Klæbu (NO); HELLIKSEN, Louise, 7050 Trondheim (NO)
(74) Representative: Protector IP Consultants AS

(57) **Abstract**

The present invention is a system and method for providing a common application framework for mobile devices or other portable devices. The system comprises at least one network and at least one server. The system is configured to communicate with at least one mobile device with access to said network unit. The system is further configured to communicate with at least one triggering unit accessible by said mobile device. The system also comprises at least one database, said database storing tag or trigger profiles related to said at least one triggering unit. An app is adapted to be installed on said mobile device receiving a first signal from said triggering unit when said mobile device comes within a pre-determined range of said triggering unit. The system further includes a content rule engine with access to at least one content repository comprising rules and instructions associated with each specific triggering unit for displaying, controlling or adapting specific content from said content repository, said content being used in said app. The system uses said first signal for generating a trigger event, said trigger event used by said server for defining content displayed in said app according to the rules and instructions specified by the content rule engine.

## Description

The present invention generally relates to a system and a method for providing a common application framework for mobile devices. More specifically, the present invention relates to a system and method for controlling an application environment upon receiving a triggering signal related to a defined user profile.

### INTRODUCTION

As mobile devices have become a part of the daily life for the masses, the number of available mobile applications has also rapidly increased over time - as a result, almost countless and diverse applications (or apps) are available.

Almost every company or service provider feels the need to be available on a mobile unit, in which developing their own mobile app has been the mere approach to be able to connect to the end customer. Almost every company and new product feels the need for their own mobile app, for example, to be able to connect to the end consumer, and in most cases to be taken seriously by the potential customers. The task of building a functional app for every platform out there is both time consuming and expensive. Companies or merchants must, therefore, budget in the costs associated with developing apps for their products, this may put pressure on small or medium-scale companies, especially start-ups were the budget is usually tight and almost all resources required on new product development.

With the technological development and customer demands on usability, value of usage and storage on the mobile unit, building and maintaining a functional app for every platform is both time consuming and expensive. Leveraging new technology for providing digital services and insight from this new technology may provide that of the customer, is an essential ground for companies future competition.

Additionally, in order to provide valuable content and services, integration to other software and technologies is needed. Companies use different types of software for different usage for both internal employees as customer segments, and often are these combined when promoting services in a mobile application dependent on the users' role. Often companies are required to develop multiple applications to serve different purposes and user roles. Integrations, maintenance, development and management of these applications becomes challenging to manage.

The technological development is more rapidly changing and leaving companies with challenges in leveraging these technologies and keeping up to date in delivering mobile services to its customers. Technologies may be company solutions that manage their core business processes and data, as with infrastructure and/or trigger technologies. Eco-systems providers, such as iOS®, android® and Windows® are in addition rapidly changing their mobile user interfaces, which again requires changes in application promoted through such eco-systems. For companies that are developing and managing their own applications in house, this requires significant expertise and resources within fields such as development in each of the eco-systems, wide technological expertise, Use Experience and design, testing, security, application management, etc. Even for companies that hire or outsource their applications, keeping track with the technological development and changes requires extensive cost budgets to be maintained which otherwise could have been spent on core business activities. From the consumer or end-user side, due to an ever-increasing amount of applications available, the end-user may end up with an impractically large amount of applications on their mobile device. The power and storage consumption in a mobile device due to apps increases with the number of installed apps. This is further made worse if each app needs access to resources on the mobile device. Furthermore, at times, due to a bug in a certain app, said app may start draining resources, such as battery or processor capacity, of said mobile device. If the end-user has a large number of installed apps, it might be difficult to find which specific app is causing the drain in the device's resources.

Although often controlled by eco-system providers, spurious or fake apps are always a security risk. By eco-systems we mean systems such as iOS®, android® and Windows®. If each app requires the user to disclose personal information and such process is time-consuming, it provides an even higher barrier of downloading and using the app. Using a new app and disclosing personal information triggers in addition, the need to review the privileges demanded by each app. By said privileges it is meant the access permissions required by each app, which may include access to the internet, camera, personal information, contacts, etc. More often users accepts user terms without reading its content or have any knowledge of what kind of information one allows for the application provider to access. Furthermore, application terms may be hard to recall in some apps, once accepted and are often found to be expanded in terms of collecting information as with its use and upgrades. In such instances, the user is often prompted with a one-touch acceptance when using the app, in which reducing the probability that the user actually reads all the terms again before accepting. Even when users have accepted the terms and conditions, there has been numerous instances of cases in which information has been perceived as misused or users have reacted to the conditions after companies have leveraged the information. This leads, in some cases, to an instant ban of an application, and/or affects reputation of service, brand/company, and loyalty of the users/customers.

In addition, multiple apps may require similar information from the user, often leading to a password-protection in the individual app, this may create an impractically large number of instances for an end-use to create, manage, and remember in terms of, for example, passwords, authentication and login information. The degree of registration, password protection and authentication vary amongst different apps and the services they provide. Within areas such as payment and the handling of certain personal information, there are both national and international standards to comply with for a company. Nevertheless, there exists different means to complying to these regulations and different authentication solutions and password requirements set. This variety requires for the user to use multiple authentication solutions and define multiple password combinations. If to, as recommended, for a user to protect oneself from fraud and identity theft, at least passwords are to change regularly. With multiple apps and equivalent amount of passwords its management is time-consuming for a user.

Service providers such as Facebook® and Google® let users sign-in different apps and websites without the need of repeating commonly required registration information. Thus reducing the amount of passwords, represent a high risk of fraud and abuse of related applications when the app is not prompting another authentication mechanism.

In addition, many users like to register for privilege or loyalty programs with different merchants. Due to a large number of such loyalty programs, many users often forget to use their privilege, promotions and giftcards sometimes by not having requisite information at hand, or sometimes just forgetting that they had registered for a specific program, or their eligibility to claim a certain discount or benefit. Many users may, therefore, fail to claim their entitled benefit from certain merchants or shopping chains despite already having confided their personal details with said merchants or shopping-chains at some time in the past. Services like igive.no allows a customer to view and charge a giftcard from a set of service providers. The challenge still prompts when the customer is in store, in order to be reminded of the possessed gift card at that given vendour. This type of service, as with other giftcards and promotions requires that the customer actively has registered at the service and/or connect a giftcard to an existing user profile at this service. The user profile created in this type of services are seldom connected to the service providers' customer databases, leaving the service as an isolated service for giftcards for this instance and the customer still to be registered in multiple service provider databases.

Apps such as AroundMe® let users explore point of interests near a certain location. Such apps commonly use location-aware API's provided for example by service providers such as Google®. Similarly, in these types of apps are only provided some publicly available information in a shared interface for the users. These types of applications are limited to promoting information, unable for a user to through the service to engage with a service provider. Furthermore, such services are often launched without the involvement of the service providers increasing the chance of misinformation, fraud and unreliable information promotion.

Patent publication US 20140195582 A1 proposed a system and method providing an inter-application communication framework. Said publication teaches a way to communicate between different apps, often called app-switch functionality. Yet, for this functionality to provide any services for the user, it requires that the user have installed all the related apps on the given mobile device, which does not address the problems highlighted in the preceding text.

Furthermore, for the apps that require payment information such as credit-card details, the end-user may need to register payment credentials in many apps. The inconvenience for the end-user does not end with registering said credentials, the end-user further needs to and administer payments and other credentials in each app, and make changes each time these credentials change, for example with an expired credit-card. This also leads to security concerns, as many of the service providers offering the app with payment functionality may be unknown to the end-user and many users may be unfamiliar with necessary minimum security requirements for payment mechanisms on the web. This alone, or further combined with an installation of a spurious or fake apps, may mean that certain users are be exposed to a risk of fraud. As with previously addressed aspects, payment methods may vary. Credit or debit cards are the most common way of processing a direct payment. Thus the process of payment may be similar, dependent on the acceptance of different cards by the payment service provider in the payment infrastructure, the user may experience that acceptance of different types of cards (mastercard, visa, diners etc) may vary among the applications. In addition, other payment methods such as operator payment, paypal®, Apple Pay® or prepaid etc may be an option.

Services like Paypal® and Apple Pay® let user centrally manage their payment profiles, however these profiles are not integrated with a given app profile and must be singularly managed. Furthermore, in order to use these services, the application owner must implement these as a payment method in the application.

Recently, the European commission released a new directive on payment services challenging these types of payment services to include also direct account payments. For mobile applications these prompt a challenge to adapt the application infrastructure to be able to connect and execute direct payments to different financial institutions, rather requesting a transaction through a payment service provider connecting the transaction to the correct financial institution. This change requires significant changes in the way mobile payments are completed.

Thus, the consumer becomes selective in using apps that provides continuous value as well as reluctant in downloading apps that only are used for a limited time, found hard to use or without value of significance.

These and other problems inherent to the cited art will be shown solved by the present invention as specified in the accompanying claims.

### The present invention

The present invention is a system and method to provide a hosted framework that to an end-user presenting different merchants in one singular app. The end-user may navigate among the merchants' service offerings from a shared list. When choosing a merchant or service provider the end-user is provided with an experience that said end-user is interacting with a customized content from that service provider.

For the sake of simplicity and without limiting or losing generality, unless otherwise stated, we will use terms device and mobile-device interchangeably to imply devices such as, personal computer, laptop, smartphone, smartwatch, tablet, smart-glasses or goggles, their likes or their combinations.

Similarly, we will use the terms merchant, service provider, vendor and customer interchangeably, which refers to a provider of any goods, services or any other offerings of any kind, both commercial and non-commercial providers. Further, we will use the terms user, consumer, end-user and client interchangeably, which is a signed user of the application and/or any other related solutions that is linked to the present invention.

Now, a general overview some of the relevant terminology is provided.

### The service provider

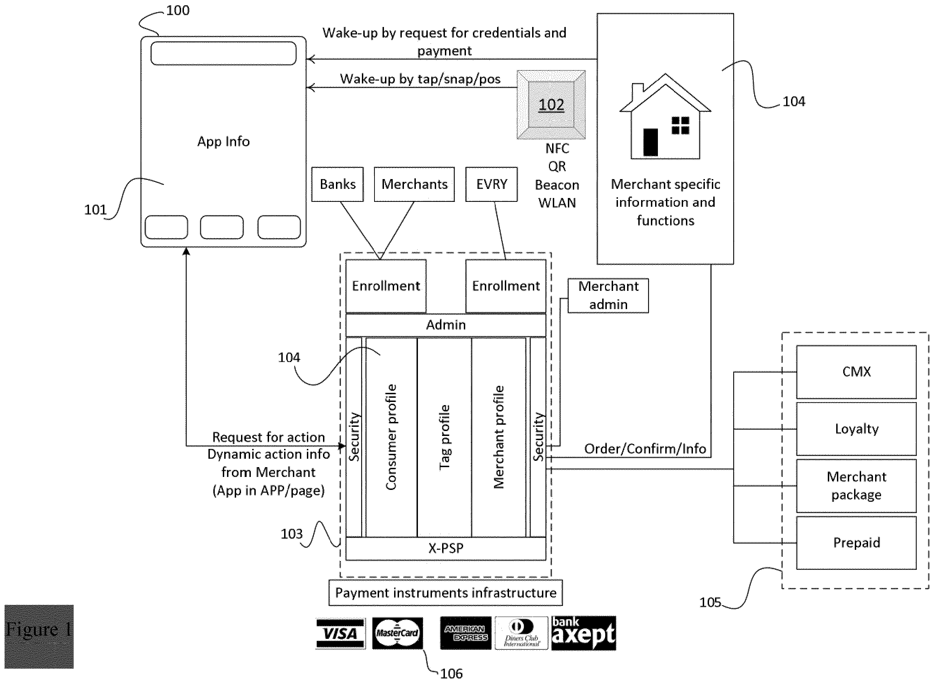

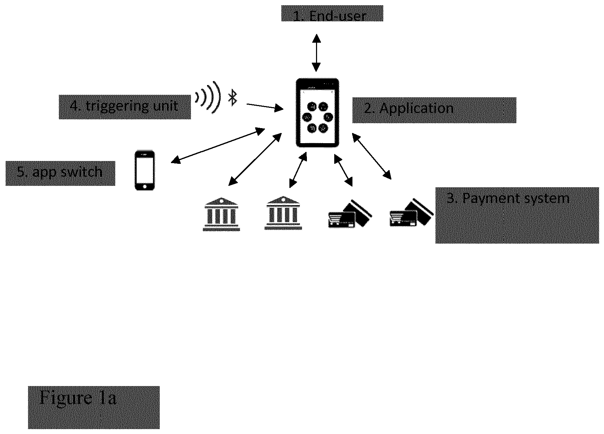

According to an embodiment of the present invention, a merchant, service provider or a vendor, henceforth called a customer, acquires firstly an access to the application framework, for example, by paying a certain amount to the framework owner or provider. Other models such as sales based royalties or fixed installments are also possible. The service provider is then given access to a server, typically a web server, in which allows the service provider to administer the setup of said service providers' offerings to the end-consumers in the application 101 (e.g., Fig. 1). The service provider may define general setup and design or specialized content may be implemented. Said service provider can then choose from a range of provided modules what would determine the content that the end-user sees while interacting with the service providers' offerings in the app. The service provider can adapt the look and feel of the content, branding it as its own to create a unique experience for the end-user or client when using its services. All these actions are primarily self-service based through a web and/or mobil based service.

According to another embodiment of the present invention, the service provider may also connect other sources to include, adapt and create information, content, modules or other input to the framework by integrating such external sources.

According to the embodiment of the present invention, the framework acts as a shared space for all service providers and their offerings to all end-users. In such, the service providers offering services through the eco system of the proposed framework will be able to launch their services quick and easily to a large number of potential customers without huge investments. When enrolled in the application ecosystem and its first location or service content in the application is created, the service provider is immediately visible and accessible to all end-users to use their services.

### The end-user

According to the embodiment of the present invention, the app according to this invention on the end-user device sends a request to the server, when the app is in use, for updated view of service providers and their locations with given service offerings and other content. The requested information is then ranged and presented in the app to the end-user based on the certain user information, such as personal preferences and geolocation.

In a preferred embodiment of the present invention, the application framework uses a schematic to provide the user with content relevant for the location of interest. The schematic comprises basic information about the location, and a set of modules, each of which has its own associated data set. The application reads the data coming from the server, thereby deleting all of the old pages and recreating them with new content data and appearance.

### Payment system

According to another embodiment of the present invention, the proposed application framework provides the user a range of options, including an option to purchase goods or services. Proposed system lets the user select between different payment options such as a credit card payment, SMS payment, payment through mobile invoice, and the use of gift cards. Payment information such as credit card information is stored as a token, said token is stored in a database and can be used regardless of the application context. The payment system framework may also trigger or be triggered by other payment system frameworks. Through app-switch relations another payment application can be triggered to execute a given payment. A payment system framework, such as a terminal or a Payment Operating System ("POS"), can when integrated to the user database or with trigger mechanisms identifying a given user profile and its payment credentials, request for a given payment to be executed. This enables the present invention to include multiple payment operating systems, units, options and its underlying frameworks.

### Trigger mechanisms

The present invention takes in use a range of features on both the client device, and the server providing content. Implementing a variety of trigger mechanisms on the client device makes the device adapt the displayed content and lead the end-user to feel that said end-user is using the service providers own app when applicable. The displayed content may further comprise audio, video, and haptic content or their likes.

According to an embodiment of the present invention the end-user can invoke the proposed system either by manually opening the app, or by the system triggering itself by different mechanisms when needed - i.e., Context based activation such as geolocation, trigger technology (NFC. QR-code, GPS/geofencing or wifi) or other systems related to the users profile and actions (ex. Purchases through a POS). In either case, the application uses the mobile device's geo-location as the main triggering mechanism when requesting position based content. Other technologies listed may in addition be set to react on a more specific location and/or to create a request for a specific content in the app.

According to the preferred embodiment of the present invention, an app according to this invention on the end-user device sends a request, preferably an http request, to the server with a certain information about the client. Said information typically comprises, identity of the user, or if said user prefers to remain anonymous, and the Bluetooth® device said end-user is within a range of. The app then receives a set of instructions from the server, including how the app shall behave and also a set of features such as the look and feel of the app.

A complex ruleset on the server determines what the user of the app will experience. Based on personal preferences and interests of the user, said user may or may not receive a notification that he is within the range of a point of interest or one or more trigger mechanisms. Notifications with a given content may also be pushed to the user from a coherent database requesting to convey message to a specific end-user. Acting upon a notification, the user may open the app directly from the notification, noticing that the content and appearance of the app has now changed according to the new surroundings where the user now finds himself.

The system according to the present invention, in order to achieve so, by receiving a code on the user's mobile device from a trigger device, through the app and sends this code to a server. The server then verifies the code from within a database, and based on the service providers' inputs and the end-user preferences adapts the content and layout of the application. Upon receiving the content and layout, the system adapts the app to refresh the displayed content with new pages and/or features. The trigger device can use either one or more of the technologies such as, beacon, NFC, QR kode that has been scanned, or even transmission of codes through a wireless network. When using either alone or in combination, technologies such as Cisco CMX, the mobile device may connect to multiple trigger devices, which also enable determining an accurate location of the user, thereby enabling features such an indoors navigation.

In the preferred embodiment of the present invention, the system uses a trigger instance to prompt a change in the app environment. The system according to the present invention proposes a combination of a variety of triggering mechanisms to adapt the app and content within the proposed application framework.

In the preferred embodiment of the present invention, the system uses a secure socket connection in the app on the device to send a request to the server asking for what action to take. When triggered, for example, by GPS geofencing, a QR code or by NFC the application sends a request to the server asking for the recipe on how to process and present the current location. When triggered by a beacon, the application first queries the server for the location of the beacon, and then asks the server for instructions on how to render the content. A beacon can easily be switched from representing one location to another, so that when it triggers the proposed application in the morning it may for example, represent a school cafeteria, but in the afternoon, it may trigger the kiosk at the local sports stadium.

When the server according to the present invention receives a request from the proposed application, it checks the database for instructions on how and what to respond. If the request asks for the location of a beacon based on the identifiers, the server will respond with the ID and basic info about the location. If the request asks for the content of a location, the server will use the profile settings for the user and the administrative settings for the location to produce a content schematic for the application.

The technological triggering mechanisms may include;
*GPS and geofencing -* using navigation systems such as location GPS technology, the app in all instances when set to do so by the user, determines the location of the end-user device it runs on. The administrator of the content provider (or customer) of the app can set the application to trigger when the end-user device is within a certain range of a point of interest. The application caches the coordinates and triggering range of said point of interest, and when the device enters the set range of the coordinates, the application triggers a more precise check of whether or not to adapt the appearance and content of the app.

When using geofencing multiple use og GPS coordinates are used and/or other trigger technologies to define specific zones. In such content may be triggerd as in any other instance, thus when connecting the different zones the present invention may combine such user movement data in the frameworks rule engine and content engine.

GPS is implemented in most mobile devices on the market today and can be used to leverage geo-fencing mechanisms. However, a user may decide not to give access to the devices GPS positioning, hindering promoting GPS related content.

*Quick Response Code -* using a built-in barcode reader the end-user of the application can read a Quick Response ("QR") Code or QRC to trigger the proposed application framework. A QR code typically consists of dark modules (square dots) arranged in a square grid on a light background. In an embodiment of the present invention, the data required to trigger the app is then interpreted from patterns that are present in both horizontal and vertical components of the QR code. In the case of the proposed Application Framework the data is a Uniform Resource Locator (URL) containing a proposed protocol and a pre-determined address pointing to the point of interest. The URL can point to the point of interest, also referred to as the location in the proposed framework, or it can contain additional data telling the application to take further action, such as starting the purchasing process of a certain product or opening a built-in map function.

The QR code can be triggered from the app through a scanner or if scanned in a single QR-code scanner. Dependent on the device scanning the code is linked to a given user profile, the content may vary.

*Near Field Communication -* the proposed Application Framework utilizes the Near Field Communication technology (NFC), in another embodiment of the present invention, to allow triggering of points of interest. NFC employs electromagnetic induction to exchange information between a smart tag and the device. This information is formatted in the same way as the QR code URL and triggers the device to show a point of interest, or to take further action as explained above.

Near Field technology chips are embodied in certain units and/or can be coded to react to certain access technologies such as entrance gateways requiring an identification. This technology can also be linked to the mobile device, the user profile or the proposed inventions' database or an integrated database in order to be able to trigger through this type of technology. NFC chips are commonly set to link to one given profile and/or content. In the embodiment of the present invention, the user and trigger database allows for a single NFC chip to function in relation to one user profile on multiple service providers.

*Bluetooth® -* using Bluetooth® technology, in yet another embodiment of the present invention, the system reads the signal coming from a dedicated Bluetooth® low energy devices known as beacon through the proposed app. This signal comprises a unique identifier (UUID), a major identifier and a minor identifier. The system analyses the signal it receives, using a set of identifiers, as well as signal strength to determine what action to take. A strong signal means that the beacon is close to the device and the application sends, for example, an http request to the server asking for instructions. Using Bluetooth technology requires that the end-users device has the bluetooth technology activated on the device in order to receive bluetooth triggered content.

*Wifi networks -* using wifi technology, in another embodiment of the solution, the user may be defined in a specific network administrated by a service provider and be provided with different services within the range of that network. Using the different network units combining the total range of the network, the network is able to communicate with the mobile device through the defined application in the present invention. Wifi networks are only able to identify a device in a network using a device code, which regularly changes. In an embodiment of the proposed solution, the framework allows for information to be exchanged with one or multiple wifi networks. End-user, or more generally, user, information is amongst the relevant information to be exchanged. When an end-user decides to connect to a given wifi network, the framework can combine the connected device ID provided to the wifi network together with the user ID. In such, when at first connected, the wifi network are able this information to quick connect a user the next time the user enters the network. Furthermore, wifi network solutions are often combined with analytical tools, in this instance may be enriched with customer specific data in its presentations.

The different network units placed within a given physical are of a network and its range, may furthermore be used to provide other services to the end user. One example is a map navigation module, in which provides the user an overview of e.g., a given indoor or outdoor location. Using the device and end-users connection to the network, combined with the devices physical location in the network using network devices to determine the exact location, the end-user is by a marker presented with its location in a map. By using the same connections between the device and network, the framework can use embedded 3rd party software e.g., Mazemap to provide the user with navigation services and professional map views including points-of-interest, meeting places, defined shop areas, etc.

Mazemap is a 3rd party solution provider of maps and map management.

### Other network based triggering units

In another embodiment of the solution, different content may be triggered in the application by different other network units. Such network triggering units include all types of network connected units in which can in any given way is connected to any of the other defined trigger technologies defined in the previous listings and/or is connected to any other system in which can communicate with the given framework. By other network based triggering unit is therefore perceived to include all kinds of software, hardware and/or other units of any kind, in which are able to communicate with the present inventions framework and in such invoke a triggered content to the end-user.

### Figures and descriptions

The invention will be described below with reference to the accompanying drawings, illustrating the invention by way of examples.
Figure 1 illustrates an embodiment of the system according to the present invention.
Figure 2 illustrates an alternate embodiment of the system according to the present invention.
Figure 3 illustrates an embodiment of the present invention depicting a typical payment registration process.
Figure 4 illustrates an embodiment of the present invention depicting a typical completion of transaction process.
Figure 5 illustrates an over-simplified block diagram of the present invention
Figure 6 illustrates a simplified flow-chart showing an embodiment of the present invention
Figure 7 illustrates another simplified flow-chart further elaborating the last step shown in fig. 6.

Figure 1 shows a block-diagram of the system according to one of the embodiments of the present invention. The system comprises especially the following components;
1. An app 101 installed on a mobile device 100 is a generic application installed on an end-user device 100. It comprises the following functions:
2. Ability to sense tags 102 or triggers in sleeping mode, which trigger and invoke said app 101. The types of tags are, for example:
   - NFC-tag
   - Beacon (Low energy Blue-tooth)
   - WLAN
   - Message from the mobile network
   - GPS and geofencing
   - User and system generated
   All the triggers are identifiable with unique ID and other credentials dependent on the type of tags, their given relation to user and/or service provider relations and or related content.
3. Control functions in the app ensure only authorized tags 102 generate dialogue with a server 103, for example, to avoid unnecessary traffic. The control functions ensure that the same tag is not triggering multiple actions within a given timeframe. The user may additionally manage the traffic and adjust in the message inbox of the app as well as in the system specifications of the given device running the app.

The App is an access point for any end-user using the solution, and in which any end-user is enrolled in the Consumer profile 104. An end-user may actively seek to download the app at one of the ecosystem providers (AppStore ®, GooglePlay® or similar), or be encouraged to do so by triggers initiating the download.

The app 101 has in addition a number of functions that can be initiated by the user, for example, Start App, Enter admin-mode, show favorites, manage profile and add-ins etc. The general profile and administration of the services have a general layout in which enables the user to navigate among the different service providers. The screen of the device 101 is divided into two types of content proposed to the user; user specific content and functions based upon the user profile 104 from the Framework server 103 and information and functions based upon the service providers' setup and profile 107.

In this way the user may manage its profile as one with content from multiple service providers ex. managing memberships, gift cards, coupons, messages and a multiple of other functions in one profile presentation. At the same time, the user may view known and new merchants or service providers and their offerings presented according to relevance, such as user information that the user enters in their app or service specter.

In another embodiment of the present invention, the interaction design, user and universal design of the solution is the same for all services presented regardless of which service provider that is offering that given function or service. For example, as with the type of membership the end-user proceeds to engage with may vary, the process of becoming a member and the flow in exchange of membership data is similar across all service providers. As with multiple different applications on the market, in which the interaction design may vary to a large extent, using a familiar design and way of usage across all services in the app increases the usability and likelihood for a user to actually use a service.

In another embodiment of the present invention, the upgrade of new versions, improvements of design and usability, as well with any other upgrades of the app is made across all services and users. In such, the solution proposes a highly cost and time effective way of enrolling new versions of the application to the ecosystem providers (AppStore®, GooglePlay® and such), both for the end-users to perform the necessary upgrade and for the service providers when this being performed once for all (in other instances are obliged to perform these upgrades singularly per application).

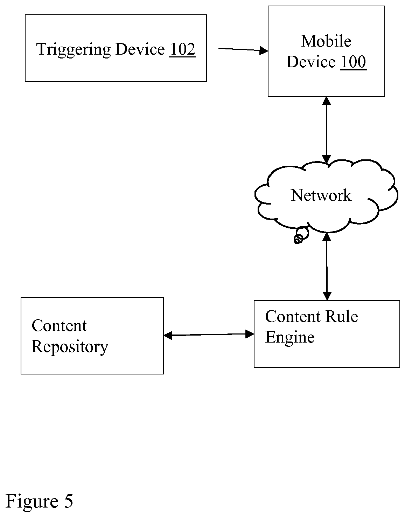

Figure 5 shows a simplified block diagram on the system according to the present invention. A mobile device 100 receives a triggering event when it comes within a specified range of a triggering device 102. The mobile device 100 is connected to a network, typically an internet connection, for example through a WiFi network, a mobile data connection, or similar. An app installed on said device 100 communicates with a content rule engine. Said content rule engine has access to at least one content rule repository to define the behavior and content of said app on said device 100.

The framework server 103 according to the proposed invention includes the following functions:
- Keeping basic information about users/consumers, 104
- Keeping basic information about service providers/merchants, 107
- A tag repository linking other content database sources to a given user/consumer and/or connected providers/merchants, 108
- Serving as a switch between the mobile user and service vendors based on tags 102 or messages initiating a function, 108
- Providing basic functionalities like payment, messaging to consumers or end-users (in-app messages and push-notifications, SMS, e-mail, etc.), providing necessary information about consumers to service providers etc.
- Management administration and support tool for all content in the database
- Security, identification and authentication solutions, 108, for content, payment, merchant/service provider profile and consumer/end-user including enrollment of the two latter listed
- Managing integrations and exchange of information to other external sources, for example reporting, export and import of data, receive and send triggering actions and related content etc. 104
- Serving as a transmitter of payment requests and user specific information to different payment infrastructures conducting a transaction 106

In another embodiment, when a dialogue between a consumer and a service provider is established, the framework server 103 serves as a channel between the two parties.

In a preferred embodiment of the present invention, the service providers or merchants can use said channel for a direct dialogue with the end-user.

Additionally, the service providers can send messages to the server 103 awakening pre-defined services like "Perform payment", "Get consumer credentials", "Send SMS to consumer", "Wake up APP and invoke a message", etc. from other databases and solutions.

Creating an end-user profile is done upon downloading and installing the generic framework app 101 as described above. This can either be initiated by the user, or initiated by a trigger solution or by an enrollment institution (for example, Bank) or a Service provider offering services through the proposed framework system.

The information about a consumer can either be registered in two ways; through the app 101 or as direct enrollment of users into the database. Registering through the app can be done, e.g., in two ways:
1. the end-user creates a new user profile, or
2. The end-user may use existing Google® or Facebook® profile in the enrollment.

Direct enrollment can be provided by a trusted partner or service provider in the solution wanting to enroll customers to quickly be able to promote their services to existing customers in the app. In such case, users are directly imported into the user profile database 104, similar profile are matched. The same requirement for security and authentication are valid for both channels.

The consumer profile includes at least the following information;
1. Profile authentication and password relations e.g. mail, phone number, defined password, Facebook® or Google® and/or other authentication and security mechanisms connected to the user
2. Device connections to the given user profile, including device authentications
3. General end-user ID and basic information, for example contact information, payment IDs, preferences and relations to given service providers
4. Related agreements of chosen services with given service provider(s)
5. External connections and connections, defined triggering units and other related sources connected to the service providers use of the framework and/or end user
6. List of defined services and functions provided through the framework to the end users as defined by the framework, service providers, other external sources and/or end-user itself
7. Repository and history of usage
8. Other user specific information and data used in the proposed invention

In another embodiment of the present invention, the user profile controls the users' acceptance for service providers to use the user profile for any given purpose and/or engage with the user. The following are a set of actions, not limited to the listed, in which can be performed based upon the set ruleset defined on a user profile:
1. Send a SMS to user; Generates an SMS to a consumer based on the mobile number from the consumer's profile and the text coming from the service provider in the command message.
2. Send an e-mail to user; Generates an e-mail to a consumer based on the e-mail address from the consumer's profile and the text coming from the service provider in the command message.
3. Send a notification to the user; generates a content based message with possible actions from a service provider to the user through the network
   Check-in: Check-in means that a user is present and communication is established between the consumer and the service provider. By check-in the service provider is able to match the consumer against loyalty register and/or customer register.
   The check-in can either be anonymous or can identify the consumer by name, Consumer ID and other criteria. The user can define the kind information that may be disclosed during a check-in. If personal credentials are required and the consumer has opted anonymity, the service provider sends a request for information to the consumer to be able to complete the transaction.
   A check-in is typically followed by a reply from the service provider with a response on the check-in.
   The consumer can decide whether all loyalty and/or membership information about other service providers or only loyalty information about the requesting institution should be delivered during the check-in.
   The validity of the information delivered to a service provider is checked by using cryptographic mechanisms. Check-in is typically documented in the log-file
4. Check-out; A check-out is used as a mechanism for informing the service provider that the user is leaving the shop/premises/site. If a payment is due, the payment process is initiated. The check-out message can also be used by the service provider to update customer register, loyalty register etc. and to send a "welcome back"-message.

All the presented examples above are defined by the rule and acceptance set by the user and defined in the user profile. An accept of such is made with direct or indirect consent by the user. Directly by request in which the end-user must accept given terms or indirectly by general terms and conditions for using the application, accepted when enrolling.

The tag profile or content rule engine, is the ruleset that connect a user profile, merchant profile, triggers and other external sources with a set of rulesets in which the framework is to act upon. Whilst other elements of the proposed invention comprises the data sources and regulates the use of such data, the tag profile combines these sources with the ruleset of its usage in the framework.

Registering a merchant may be done in two steps:
a) Authorize a merchant for registering - Should be done by a Trusted Partner
b) Register Merchant data and administer these, for example, done as self service

In another embodiment of the present invention, registration of a new merchant is processed through a web portal in which includes, to
1. Validate the enrollment of a new merchant,
2. Provide the merchant or service provider access to manage and setup services in the Framework, and
3. Connect the given service provider to a specific trusted partner, ex a bank and its payment relations.

The Merchant profile includes at least the following information;
1. General merchant ID and basic information, for example contact information, type of merchant (commercial or non-commercial), payment IDs and relations,
2. Related agreements of chosen services and prices
3. External integrations and connections, defined triggering units and other related sources connected to the service providers use of the framework
4. List of defined services and functions provided through the framework
5. Repository and history of usage
6. Other merchant specific information and data used in the proposed invention

Databases, for example, those holding consumer and service provider credentials 104 is highly protected and strong authentication used to access sensitive credentials. Said database and other databases used by the system may either be stored on the server 103 or be stored in another dedicated server or storage unit.

Type of security and authentication requirements may vary dependent on the action and/or requests a user is to perform, but may be triggered in an event of ex. log-in to the app, access user specific information, request a membership or engage in other binding actions between the user and a service provider, request for a transaction to be made,

In another embodiment of the present invention, the merchants or service providers are given access to a web based portal in which the service provider may managed ones profile, proposed services in the app and other related connections to the framework. When a merchant is enrolled a admin user may self-serviced use the framework of its purpose. On this customer portal the merchant or service provider may, not limited to, but at least do the following;
1. View agreement and pricing of the service
2. Administrate and leverage current and new modules and functions
3. Set up and administrate its functions and modules
4. View, edit, change and export/import relevant data and content as defined by the given agreement and/or modules and functions the service provider is granted to use in the Framework

### User databases and loyalty servers:

The framework server 103 can communicate with a user database and/or loyalty server which holds information about the consumer's profile and loyalty program registered to a given services provider. Such user databases may be Customer, employee and/or membership databases in which correspond with other systems such as membership systems or customer relationship system (CRM), but also related database systems to a customer or user actions, such as economy management systems or Enterprise Resource planning systems (ERP). Common to all these databases or systems is the need to keep track of specific user or information data for a given purpose, such as economy or loyalty programs. This might be a 3rd party solution or preferably another solution delivered by EVRY.

Exchanging the user profile, content and different reporting information across multiple databases enhances the value of the interaction true the given system as with enrich the total data collected on the shared user profile in 104.

### Network and analytical databases:

Cisco is a global actor delivering wireless networks as with enabling technology for wifi based analytics and value added mobile services. Cisco CMX is a wireless network based analytical tool in which allows keeping track of mobile units within the range of a given wireless network. The CMX unit uses network components to track and continuously position and track the movement of a given device. Such information may be useful to provide value added services such as maps with device position data, which might be useful for indoor navigation and location based functions on the phone. The Cisco CMX solution only uses a device ID and are not able to provide user specific data, map or navigation services unless combined with value added services such as the app 101. In order for the app 101 to be triggered and use the CMX for network positioning it has to be established an integration allowing device ID and its related user profile to be exchanged to the CMX solution and for CMX to provide position data in a given map. When the app 101 is triggered by a CMX network, the framework server 103 sets up a connection to the CMX server to receive trigger transactions to perform matching functions using a trigger profile.

A wireless network is limited to the range and setup of that wireless network. The CMX solution is implemented to correspond to one or multiple wireless network thus limited to a given owner of that network.

In a preferred embodiment of the present invention, the framework combines multiple CMX solutions as with wireless networks, allowing the solution to provide user specific wifi based services across all network owners and different service providers creating an ecosystem of wireless providers.

The present invention has been verified by Cisco (july 2016) as a value added service using the CMX wireless connection and analytics tool to provide users and network owners with a set of additional functionality such as indoor positioning and route guidance.

A payment module (X-PSP) handles financial transactions with relevant payment means. The payment module controls accepted payment instruments (for merchants or payee) and available payment instruments (for consumer or payer) to execute accepted transactions.

The payment module handles payment schemes including, credit-cards such as Visa® and Mastercard®, debit notes, immediate payments, ON-us payment with prepaid account owned by merchant, held by the system, open loop prepaid account (owned by payer), and when offered as a separate service. The payment module can also be connected to other payment infrastructures, not limited to, but such as mobile payment solutions, Payment Operating Systems and/or payment units.

A payment may be initiated in different ways with different payment alternative. In all instances, the payment process results in debiting a registered consumer and crediting a registered service provider (merchant). Furthermore, any payment transaction set to be processed requires that there is a minimum of consumer ID and payment alternative that is necessary authorized and in which has the necessary amount coverage for the requested transaction. Any merchant defined in the system to receive a given transaction from a consumer must additionally be authenticated to receive payments for the given payment system performing the transaction.

On receiving the payment command, the framework 103 server typically performs the following:
1. Check consumer's payment instruments are matching the merchant's
2. Perform an authorization request to X-PSP. Uses consumer's profile information and/or payment IDs in order to proceed the request to a payment system
3. If needed, a dialogue with the consumer is set up to validate and accept the payment dependent of what authentication and/or security requirements are set from that specific payment system and/or transaction
4. A payment transaction is requested and generated with the decided instrument in the given payment infrastructure
5. The transaction is logged in the consumer's and service provider's log in the Framework 103
6. The transaction is logged in the respective payment system and executed

Fig. 1 a shows how this in general is set up from the end-user (1) engaging in a service provider in the application (2) in order to make a payment, further processed with a certain instrument in any give payment infrastructure (3).

In the consumer profile 103a general information of the user is set, as with authentication mechanisms of such user related to the users defined payment instruments. Dependent on the payment instrument of choice, consumer profile ID and a specific payment key can be stored in the Framework 103.

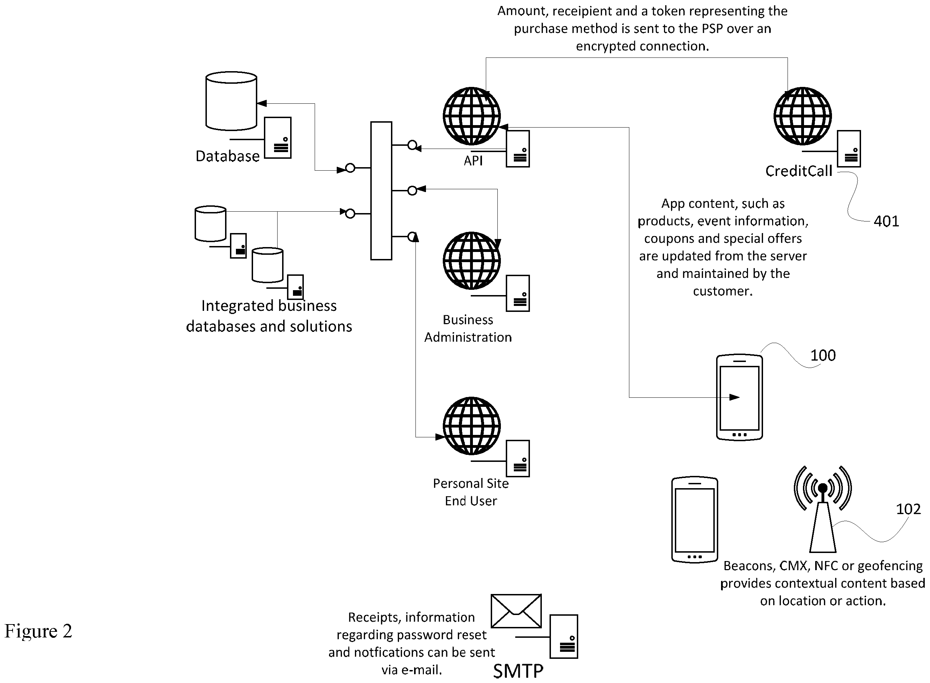

Fig. 2 shows an alternate embodiment of the present invention, more specifically illustrating a payment service provider included in the overall modell using a specific service provider (CreditCall) 401.

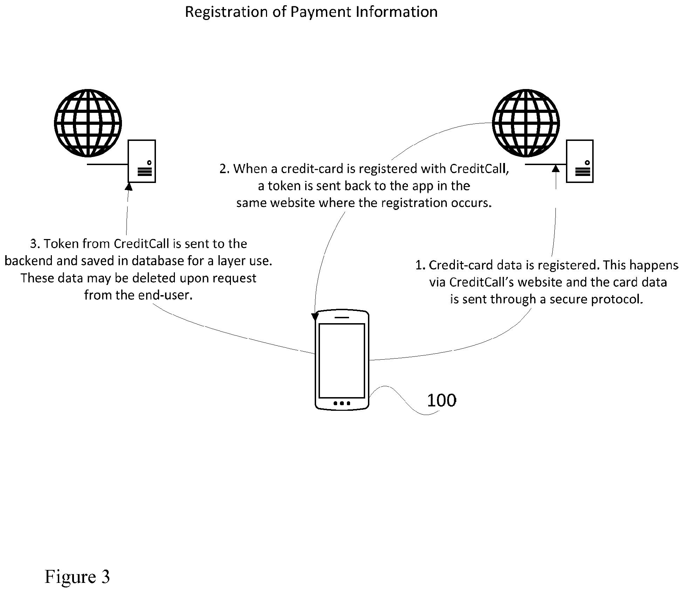

Fig. 3 shows another embodiment of the present invention illustrating a registration of payment information in which generates a payment key, defined as a token when holding credit card information. Payment key information in the instance of credit card information is generally protected with high security and regulations for storage. In the embodiment of the present invention, the application presents a scheme in the mobile app 100, for the user, in which the user registers its payment credentials and further is directly stored by the 3rd party payment service provider. The payment infrastructure in the present invention then receives a token which is stored as a payment request key in the user profile.

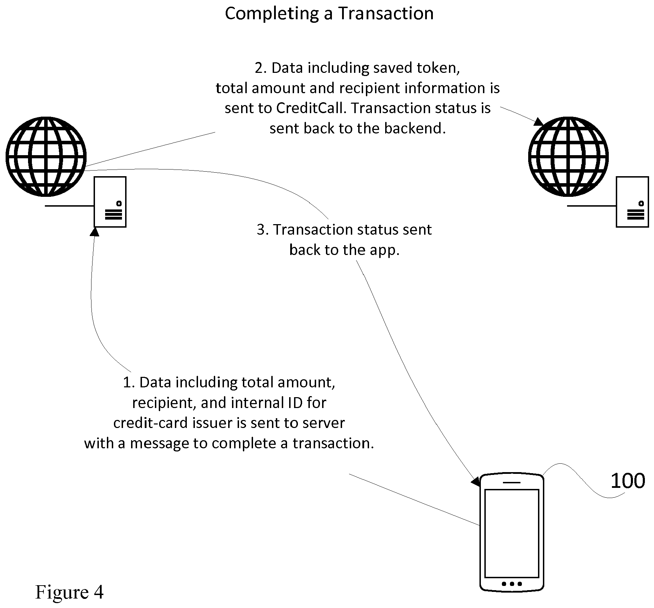

Fig. 4 shows another embodiment of the present invention illustrating a typical completion of transaction when the transaction is made as a credit card transaction.

Furthermore, in figure 1a, the service provider may offer different goods and services in which the end user may purchase in the application (2). In this specific embodiment of the present invention, allows for the end -user to choose from multiple alternative payment methods or instruments. Such payment methods may include, combined and not exclusively;
- Credit card payment
- Direct account payment to multiple financial institutions
- Closed or open loop prepaid accounts by one or multiple service providers, such as giftcards and credit notes. Closed loop payment refers to when the prepaid account and transactions is only allowed within a closed merchant environment, ex. with pre-defined creditors. An open loop prepaid solution can be used in the same way an open payment instrument like Visa®, but with some limitations.
- Other mobile payment solutions, such as mCash® or Vipps® or similar

Furthermore the payment module (figure 1, 106) allows for payments to be triggered by other systems (4) (ex Payment operating systems and related trigger technologies like terminals) and/or trigger payments in other mobile payment applications through using an app-switch alternative (5).

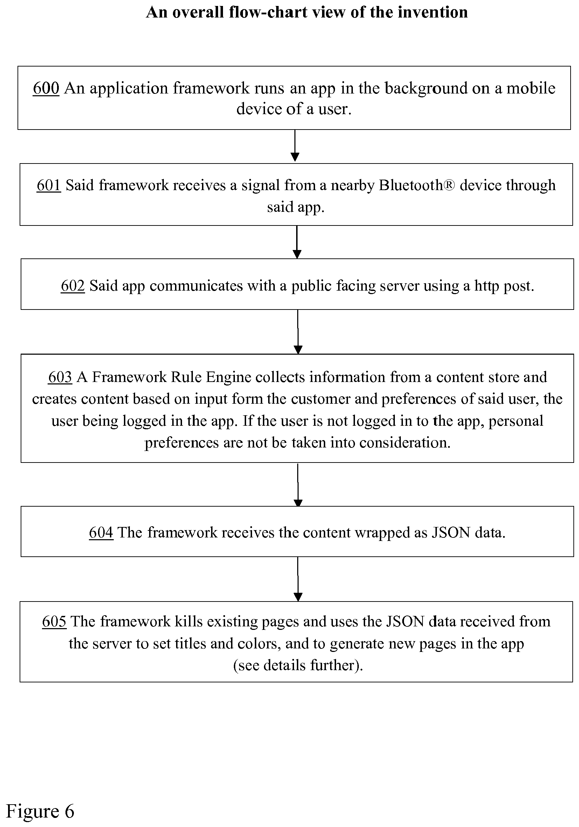

Figure 6 shows a typical embodiment of steps and signal flow in the system. First 600, an application related to the proposed application framework runs on a mobile device of an end-user, then 601 said framework receives a triggering signal from a nearby triggering device, in this example, a Bluetooth® based device. Said signal is detected by the app and communicated further 602 to framework server, typically a public facing server, typically using a commonly used protocol, such as http. Then 603, a framework rule engine running on said framework server performs tasks such as collecting information from a content store, for example, on the said server, and input set from the customer, as well as preferences set by said user - If the user is logged-in the app. If, however, the user is not logged-in to the app, the personal preferences are ignored. Further 604, The framework app receives the content from the server wrapped as JSON data. Then 605, the framework app kills existing pages in the app and uses the JSON data received from the server to adapt the content displayed in the app. Said content includes titles and colors, and is used to generate new pages in the app.

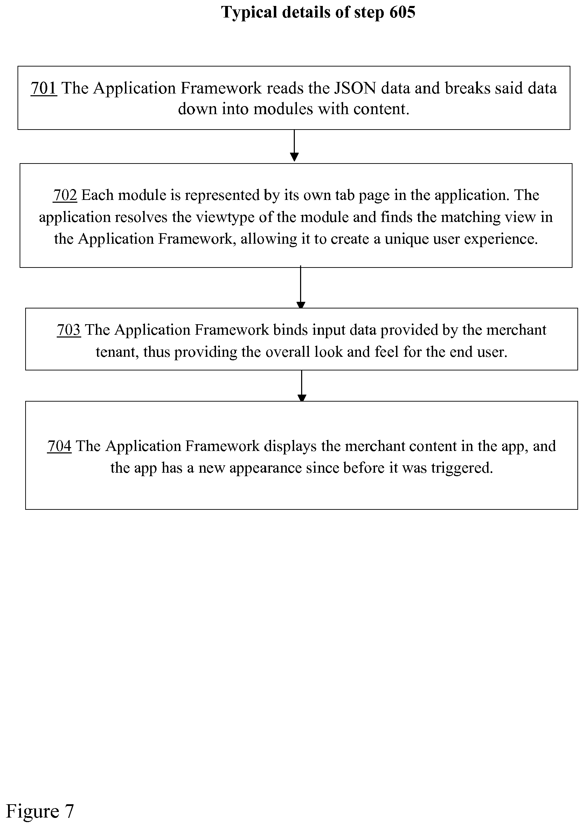

In fig. 7, a typical methodology of step 605 is further elaborated. First 701, the framework reads the JSON data and breaks said data down into respective modules comprising content. Further 702, each module is represented by its own tab page in the application. The application resolves the viewtype of the module and finds the matching view in the application framework, allowing said framework to create a unique user experience. Then 703, the application framework binds the input data provided by the merchant tenant, thus providing the overall look and feel for the app and displayed content to the end user. Finally 704, the application framework displays the merchant content in the app, leading to a potentially very different appearance and structure of the app as compared to how it was before a triggering event.

To summarize, the present invention is a system and method for providing a common application framework for mobile devices or other portable devices. The system comprises at least one network, preferably internet, and at least one server with access to said network. The system is configured to communicate with at least one mobile or portable device with some form of access to said network. The system is further configured to communicate with at least one triggering unit. The at least one triggering unit being accessible by said at least one mobile device. The mobile device is adapted to be installed with an app. When said mobile device comes within a pre-determined range of at least one of the said at least one triggering unit, the mobile device receives a first signal from the at least one of the triggering unit. Said first signal is preferably communicated also to the app. The app has some form of access to at least one of the said at least one server. Said app is capable of receiving and analyzing a first signal from said triggering unit whenever said mobile device comes within a pre-determined range or distance of said triggering unit. Said app may further be capable of communicating at once with a plurality of triggering units that lie within a given range of the given location of said mobile device. The system further comprises at least one database, said at least one database storing tag or trigger profiles related to said at least one triggering unit. The at least one database preferably also comprises at least one consumer or user profile. The at least one database preferably also comprises at least one merchant profile. The consumer profile comprises information related a user of said at least one mobile device. Said trigger profile comprises information related to said at least one triggering unit. Said merchant profile comprises information related to at least one merchant. The at least one merchant can also have some sort of access to said application framework. The system further includes a content rule engine, said content rule engine is running at least partially on said server and has access to at least one content repository. Said content rule engine typically comprises rules and instructions associated, for example, with each specific triggering unit for displaying, controlling or adapting specific content from said content repository, said content being used in said app. The system is adapted to use said first signal for generating a trigger event. The trigger event is used by at least one of said at least one server for defining content displayed in said app according to the rules and instructions specified by the content rule engine. At least one of said at least one server can also use other relevant information from said at least one database for defining content displayed in said app. Said relevant information comprises information related to the triggering unit sending said first signal. Said relevant information can also comprise information related to at least one of the merchants participating in the application framework. Preferably, said relevant information related to at least one of the merchants, is associated with the triggering unit sending the first signal. Said relevant information can also comprise relevant settings or information from the consumer profile.

At least some of the consumer profile settings are selectable by the user. Such selectable settings include the choice of merchants that are allowed to communicate with the user.

According to another embodiment, the trigger event is also generable by the user.

The system may use a variety of triggering technologies alone or in combination, said technologies include, Bluetooth®, NFC, QRC, WLAN, mobile network, an SMS, a message on the mobile network, navigation technologies such as GPS, geofencing or other kinds of wireless units.

The system may refresh content dynamically, which includes deleting and recreating at least partially the pages in the app.

Preferably, when said first signal is received, said app is adapted to transmit a second signal to said at least one server, and the at least one server is adapted to dynamically delete and recreate at least partially the pages in said app based upon the information related to at least one of the merchants associated with the triggering unit sending the first signal.

The system according to another embodiment may use a schematic to display content relevant for a given location of interest where said location of interest is determined by said triggering unit, said schematic comprising basic information about the location, and a given set of modules, each said set of modules being associated with its own associated data set and said application reading data from said server, thereby at least partially deleting the previous content in said app and recreating new content and appearance.

Preferably, the second signal is transmitted for requesting data from the at least one server further based upon the consumer profile.

In another embodiment, the system stores payment information, such as credit-card information as token, said token being stored in said at least one database and used as per requirement, regardless of the application context.

The system can also be adapted to communicate with a payment infrastructure.

The system can further be adapted to store payment information such as user payment ID and/or authentication. Said user payment ID and/or authentication is stored in said at least one database and used regardless of the application context.

In another embodiment, the system allows only authorized triggering unit to generate a dialogue or a triggering event with the server, for example, to reduce traffic to said server. The system may further block the same triggering unit from generating a new triggering event before a given time since the last triggering event has elapsed.

In another embodiment, said server acts as a channel between a user and a merchant for processes including execution of a transaction.

The system can further be adapted to communicate with a plurality of external modules. Examples of said external modules are, CMX, loyalty and pre-paid. The external modules can also be servers, databases or other information sources.

In another embodiment, the system communicates with external modules, including CMX, loyalty server and pre-paid server.

In another embodiment, the system initiates a check-in process for example, when a user carrying the mobile device arrives within a certain range of said at least one triggering unit. Said check-in process may further initiate functions including, automatic retrieval and use of loyalty profile of the user, and informing at least one relevant merchant about the arrival of the user.

In another embodiment, the system initiates a check-out process when a user carrying the mobile device departs a certain distance from said at least one triggering unit. Said check-out process may further initiate functions including, initiating a payment process, generating a welcome-back message for said mobile device, and informing a specific merchant about the departure of the user.

In another embodiment, the system uses parameters including signal strength of said first signal to determine distance of a user carrying said mobile device from said at least one triggering unit.

In another embodiment, the system also comprises a merchant server.

In yet another embodiment, the system further comprises a payment handling module.

In another embodiment, the system communicates content wrapped as JSON data.

## Claims

1. A system for providing a common application framework for mobile devices, said system comprising;
at least one network,
at least one server with access to said network, and
at least one database accessible by said server, wherein
the system is configured to communicate with at least one mobile device with access to said network; and
the system is further configured to communicate with at least one triggering unit, the at least one triggering unit being accessible by said at least one mobile device, and
an app is adapted to be installed on said mobile device receiving a first signal from said triggering unit when said mobile device comes within a pre-determined range of said triggering unit, and said app further having access to said server;
wherein,
said at least one database comprises consumer profile, trigger profile, and merchant profile,
said consumer profile comprises information related a user of said at least one mobile device,
said trigger profile comprises information related to said at least one triggering unit, and
said merchant profile comprises information related to a plurality of merchants having an access to said application framework, and;
the system includes a content rule engine adapted to run at least partially on said server with access to at least one content repository, wherein said content rule engine comprises rules and instructions associated with said triggering unit for displaying or adapting specific content from said content repository in said app, and
the system is adapted to use said first signal for generating a trigger event, said trigger event being used by said server for defining content displayed in said app according to the rules and instructions specified by the content rule engine and relevant information from said at least one database, wherein said relevant information comprises information related to the triggering unit sending said first signal, and information related to at least one of the merchants associated with the triggering unit sending the first signal.

2. System according to claim 1, wherein said relevant information also comprises consumer profile settings.

3. System according to claim 2, wherein at least some of the consumer profile settings are selectable by the user, including the choice of merchants that are allowed to communicate with the user.

4. System according to any of the claims, wherein the trigger event is also generable by the user.

5. System according to any of the claims, wherein the triggering unit comprises either one or a combination of technologies including, Bluetooth®, NFC, QR Code, WLAN, mobile network, navigation technology including GPS, geofencing, or other types of wireless units.

6. System according to any of the above claims, wherein when said first signal is received, said app is adapted to transmit a second signal to said at least one server, and the at least one server is adapted to dynamically delete and recreate at least partially the pages in said app based upon the information related to at least one of the merchants associated with the triggering unit sending the first signal.

7. System according to claim 6, wherein the second signal is transmitted for requesting data from the at least one server further based upon the consumer profile.

8. System according to any of the above claims, wherein the system is adapted to use a schematic to display content relevant for a location of interest, said location of interest determined by said at least one triggering unit, said schematic comprising basic information about the location, and a set of modules, each of said set of modules being associated with its own associated data set and said application reading data from said server, thereby at least partially deleting the previous content in said app and recreating new content and appearance.

9. System according to any of the claims, wherein the system is also adapted to communicate with a payment infrastructure.

10. System according to claim 8, wherein a payment is initiated based upon the consumer profile settings and user input.

11. System according to claim 8, wherein the system stores payment information such as user payment ID and/or authentication, said user payment ID and/or authentication is stored in said at least one database and used regardless of the application context.

12. System according to any of the above claims, wherein the system allows only an authorized triggering unit to generate a dialogue with said server, and the system further ensures that the same triggering unit does not trigger multiple actions within a given timeframe.

13. System according to any of the above claims, wherein the system further adapted to communicate with a plurality of external modules, types of said external modules including, CMX, loyalty and pre-paid.

14. System according to any of the above Claims, wherein the system is adapted to initiate a check-in process when a user carrying the mobile device arrives within a certain range of said at least one triggering unit, said check-in process further initiating functions including, automatic retrieval and use of loyalty profile of the user, and informing at least one relevant merchant about the arrival of the user.

15. System according to any of above Claims, wherein the system initiates a check-out process when a user carrying the mobile device departs a certain distance from said at least one triggering unit, said check-out process further initiating functions including, initiating a payment process, generating a welcome-back message for said mobile device, and informing a specific merchant about the departure of the user.
